# EUROPÄISCHE PATENTSCHRIFT

(11) **EP 0 663 311 B1**
(45) Veröffentlichungstag und Bekanntmachung des Hinweises auf die Patenterteilung: **26.08.1998**
(21) Anmeldenummer: 94119586.9
(22) Anmeldetag: 12.12.1994
(51) Int. Cl.: B60K 37/02

(54) **Hybridanzeige-Instrument, insbesondere für eine Kraftfahrzeugarmaturentafel**
Hybrid display instrument, especially for a motor vehicle instrument panel
Instrument d'affichage hybride, notamment pour un tableau de bord d'un véhicule automobile

(30) Priorität: 18.01.1994 DE 4401231
(43) Veröffentlichungstag der Anmeldung: 19.07.1995
(73) Patentinhaber: Valeo Electronics Verwaltung GmbH, 75189 Remchingen (DE)
(72) Erfinder: Cremers, Rolf, Dr., D-76359 Marxzell (DE); Ziegler, Wolfgang, Dr., D-76307 Karlsbad (DE)
(74) Vertreter: COHAUSZ HANNIG DAWIDOWICZ & PARTNER

(56) Entgegenhaltungen:
- DE-A- 2 064 025
- DE-A- 3 326 972
- FR-A- 1 035 163
- GB-A- 2 266 375

## Beschreibung

Die Erfindung betrifft ein Anzeige-Instrument, insbesondere für eine Kraftfahrzeug-Armaturentafel, mit einem Anzeigebereich zur Darbietung sowohl einer analogen Informationsanzeige mittels wenigstens eines Zeigers vor wenigstens einer kreisborgenförmig verlaufenden Skala, wie auch symbolischen Informationsanzeigen mittels Festzeichen- und/oder Wechselzeichen-Zellen am Rande des Anzeigenbereiches, wobei symbolische Informationsanzeigen außerhalb des Anzeigebereiches erzeugt und in den Anzeigebereich eingeblendet werden.

Der nächstliegende Stand der Technik ist in den Dokumenten DE-A-20 64 025 und GB-A-22 66 375 gezeigt. Beide Dokumente offenbaren Hybridanzeigeinstrumente für eine Kraftfahrzeugarmaturentafel. Die gezeigten Instrumente haben einen Anzeigebereich zur Darbietung sowohl einer analogen Informationsanzeige mittels wenigstens eines Zeigers vor wenigstens einer kreisbogenförmig verlaufenden Skala und zur Darbietung symbolischer Informationsanzeigen, wobei die symbolischen und die analogen Informationsanzeigen gleichzeitig ablesbar sind und wobei die symbolischen Informationsanzeigen von Festzeichen- und/oder Wechselzeichen-Zellen erzeugbar sind, die hinter einer Gehäuse-Vorderwand unterhalb des Anzeigebereiches etwa quer zur Einblickrichtung angeordnet sind.

In der DE-A-42 27 106 ist ein weiteres Informationsanzeigegerät für Fahrzeuge dokumentiert. Es handelt sich um ein Kombinations-Anzeigegerät für Fahrzeuge nach den Merkmalen des Oberbegriffes. Bei diesem Instrument kann wahlweise zwischen zwei Anzeigesektionen umgeschaltet werden. Die eine Anzeigesektion enthält die Merkmale von Anzeigeinstrumenten, wie sie beispielsweise in DE-A-38 03 190 oder in DE-A-37 36 761 vorgestellt werden.

Die andere Anzeigesektion ist eine digitale Informationsanzeige, die außerhalb des Anzeigebereiches erzeugt und in den Anzeigebereich eingeblendet wird.

Dieses Instrument hat den Nachteil, daß die Anzeigesektionen nur alternativ ausgewählt werden können. Wenn die digitale Informationsanzeige in den Anzeigebereich eingeblendet ist, lassen sich die hinter der transparenten Abdeckung liegenden Anzeigen nicht mehr ablesen. Alle genannten Instrumente eignen sich wegen ihrer Größe nur zum Einbau in Armaturenbrettern herkömmlicher Dimension, d.h. mit ausreichend großem Platzangebot.

Insbesondere bei der Konzipierung kompakter Fahrzeuge, bei denen das Armaturenbrett nur einen beschränkten Anzeigebereich aufweist, besteht das Problem, daß trotz des eingeschränkten Platzangebots die Kreisbogenskalen gut erkennbar bleiben und in dem selben Anzeigebereich auch die umfangreichen zusätzlichen Informationen dargeboten werden sollen, die in größeren Fahrzeugen bereits zum Standard gehören und auf die deshalb auch der Benutzer eines City-Zweitwagens nicht verzichten möchte.

Man könnte daran denken, die Festzeichen- und Wechselzeichen-Teile für symbolische Informationsanzeigen in der Innenkreisfläche analoger Informationsanzeigen unterzubringen. In diesem Fall würde allerdings die Erkennbarkeit der zwangsläufig kleinen Symboldarstellungen zu stark durch die wechselnde Zeigerstellung der Analog-Skala beeinträchtigt werden. Außerdem ist für den Fahrer die Orientierung im Informationsangebot schwieriger, wenn die Symbole über die gesamte Fläche des Anzeigebereiches verstreut sind. Das gilt auch, wenn die Symbole auf der Fläche zwischen einander benachbarten Rundskalen verteilt werden.

Der Erfindung liegt deshalb die Aufgabe zugrunde, ein Instrument gattungsgemäßer Art derart auszulegen, daß es trotz des reduzierten Platzangebotes (im Vergleich zur herkömmlichen Dimensionierung von Kraftfahrzeug-Armaturenanzeigen) eine übersichtliche, vergleichsweise großflächige und dadurch gut aufnehmbare Kombination symbolischer und analoger Informationsanzeigen ermöglicht.

Diese Aufgabe wird erfindungsgemäß dadurch gelöst, daß das Anzeigeinstrument nach dem Oberbegriff des Hauptanspruchs derart ausgelegt ist, daß die symbolischen Informationsanzeigen außerhalb des Anzeigebereiches erzeugt und in das Anzeigefeld eingeblendet werden und gleichzeitig mit den analogen Informationsanzeigen ablesbar sind.

Nach dieser Lösung sind die symbolischen Informationsanzeigen (Piktogramme und alphanumerische Wechselzeichen) an den Rand des Anzeigebereiches und vorzugsweise in als solcher bekannter Weise an dessen unteren Rand verlegt; wobei sich das Instrument jedoch wesentlich über diesen Rand hinaus erstreckt, um den Platzbedarf für die Generierung von Zeichendarstellungen aus derem Anzeigebereich herauszuverlegen, diesen also im wesentlichen für Sichtdarbietungen ausnutzen zu können. In diesem Sinne ist zumindest die Leiterplatte für die Ansteuerung der Zellen nach außerhalb des Randes des Anzeigebereiches verlegt, wobei lediglich diese Zellen längs jenes Randes hinter der Frontscheibe aufgereiht und von einem flach-keilförmigen Lichtleiter für die Durchleuchtung hintergriffen sind. Zweckmäßigerweise sind auch die Zellen selbst nach außerhalb des Randes des Anzeigebereiches verlegt, um die anzuzeigenden Zeichen über Lichtschächte mit Umlenk-Reflektoren oder über Lichtleiter mit entsprechend abgewinkeltem Strahlengang in vorzugsweise den unteren Rand des Anzeigebereiches einzublenden, was den physiologischen Vorteil des verlängerten Sichtweges vom Betrachter über die Umlenkfläche zu der Zelle hat, in der die Zeichendarstellung generiert wird.

Um den Anzeigebereich für die analoge Informationsanzeige, insbesondere wenn diese oberhalb der Zeile mit den Symbolanzeigen bogenförmig begrenzt ist, optimal auszunutzen, erstreckt sich die kreisabschnittförmige Skala nur über einen Zentrumswinkel von weniger als 180 Grad. Die Drehwelle des Zeigers liegt also hinter der Ebene der symbolischen Informationsanzeigen am unteren Rand des Anzeigebereiches oder sogar noch wesentlich darunter und die Sichtfläche des Instrumentes nimmt nur etwa die obere Hälfte von dessen Gehäuse-Frontfläche ein.

Zusätzliche Alternativen und Weiterbildungen sowie weitere Merkmale und Vorteile der Erfindung ergeben sich aus den weiteren Ansprüchen und, auch unter Berücksichigung der Darlegungen in der Zusammenfassung, aus nachstehender Beschreibung von in der Zeichnung unter Beschränkung auf das Wesentliche abstrahiert, aber angenähert maßstabsgerecht skizzierten, bevorzugten Raealisierungsbeispielen zur erfindungsgemäßen Lösung. Es zeigen:
- Figur 1:: Den Anzeigebereich eines Hybridanzeige-Instrumentes in Ansicht.
- Figur 2:: In Querschnittsdarstellung ein Hybridenanzeige-Instrument entsprechend Figur 1 mit in den unteren Anzeigebereich hineinragendem Display und
- Figur 3:: in Abwandlung gegenüber der Ausstattung nach Figur 2 ein in den unteren Rand des Anzeigebereiches eingespiegeltes Display.

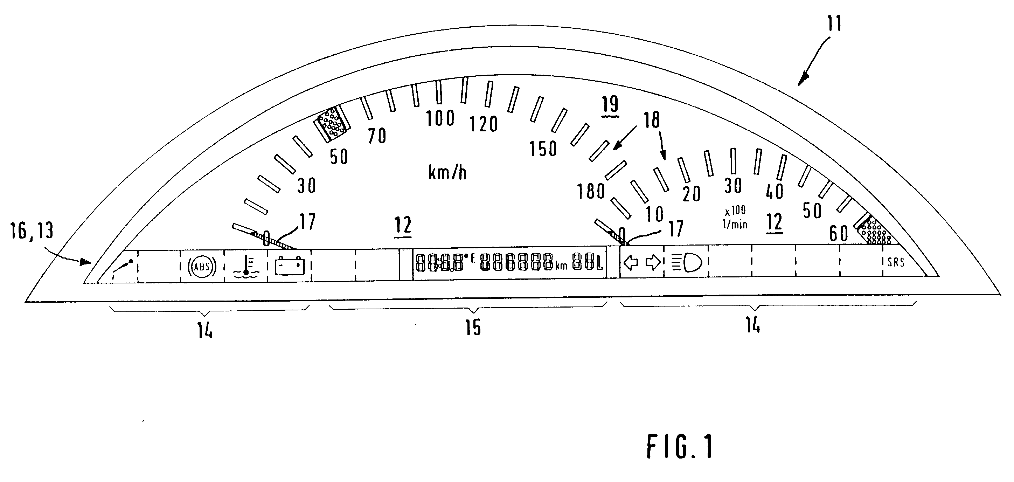

Das in Figur 1 in Ansicht skizzierte Hybridanzeige-Instrument 11 ist für die Armaturentafel eines insbesondere kleinen Kraftfahrzeugs vorgesehen, in dem die Fläche eines Anzeigebereiches 12 beschrankt ist. Um diesen Anzeigebereich 12 optisch gut auszunutzen, sind die wesentlichen - vorzugsweise die gesamten - symbolischen Informationsanzeigen 13 mit ihren Festzeichen 14 (wie nur aus aktuellem Anlaß aufleuchtenden Warnsymbolen) und ihren Wechselzeichen 15 (zur Klarschrift-Informationsdarstellung durch elektrooptische Segment- oder Mosaik-Aktivierung) längs eines Randes 16 des Anzeigebereiches 12 angeordnet, vorzugsweise in einer Zeile längs des unteren Randes 16, so daß die Darstellungen in keiner im Anzeigebereich 12 vorkommenden Winkelstellung eines Zeigers 17 auch nur teilweise verdeckt sein können. Um die Fläche des nach oben abgerundet verlaufenden Anzeigebereiches 12 optimal durch die Skala 18 der analogen Informationsanzeige 19 auszunutzen, also einen hinreichenden Skalenweg für eine gute Auflösung insbesondere im spezifisch interessierenden Bereich der analogen Informationsanzeige 19 realisieren zu können, liegt der Drehpunkt des Zeigers 17 relativ weit unterhalb des unteren Randes 16 außerhalb des Anzeigebereiches 12, so daß die Skala 18 sich nur über einen Kreisbogen erstreckt, der einem Zentrumswinkel von weniger als 180 Grad entspricht. Es können, wie in Figur 1 veranschaulicht, mehrere analoge Informationsanzeigen 19 mit unterschiedlichen Radien ihrer kreisbogenförmig verlaufenden Skalen 18 nebeneinander über der am unteren Rand 16 des Anzeigebereiches 12 verlaufenden Zeile für symbolische Informationsanzeigen 13 angeordnet sein.

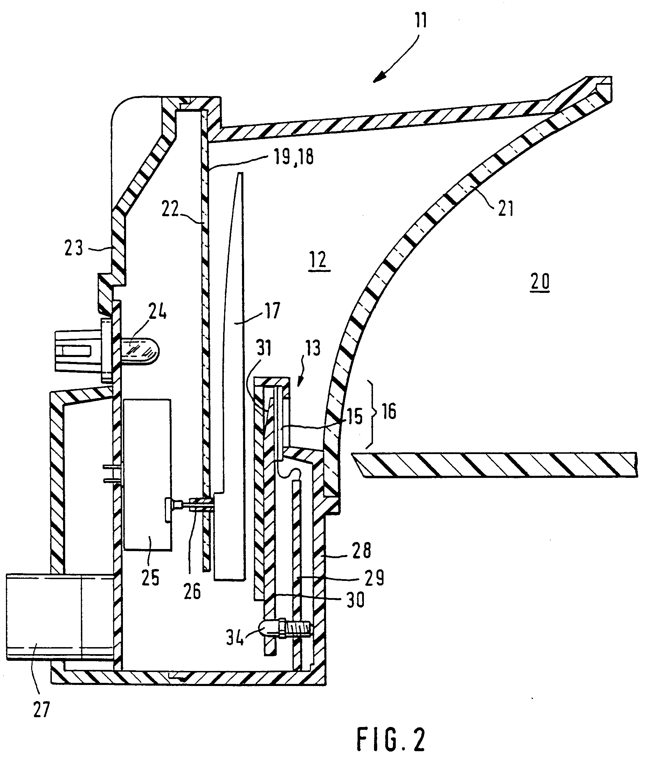

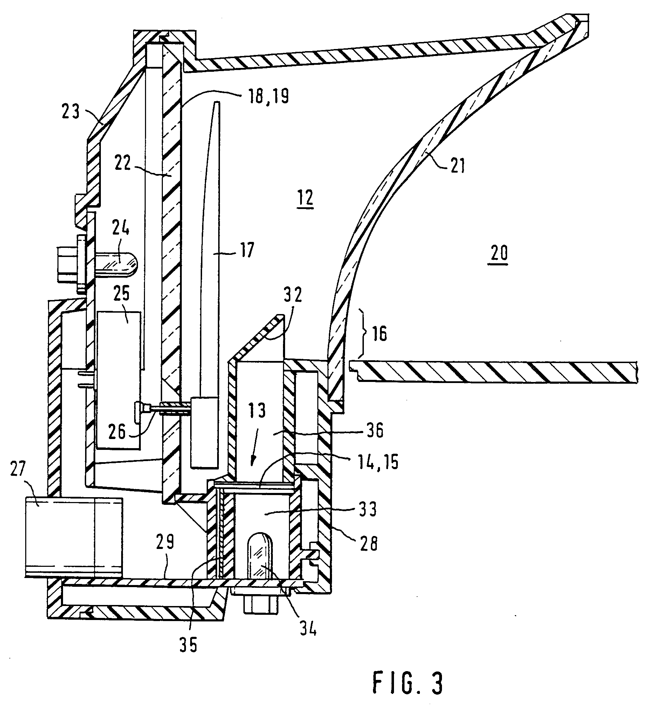

Das Hybridanzeige-Instrument 11 ist (wie aus den Querschnittsdarstellungen gemäß Figur 2 und Figur 3 ersichtlich) hinter der Sichtfläche des Kraftfahrzeug-Armaturenbrettes am Ende eines Einblickschachtes 20 angeordnet. Dort kann das Instrument 11 sich quer zur Einblickrichtung über die untere Begrenzung des Einblickschachtes 20 hinaus nach unten erstrecken, ohne daß es optisch oder körperlich stört. So ist die tatsächliche Höhe des Instrumentengehäuses durchaus etwa doppelt so groß auslegbar, wie die des Anzeigebereiches 12 selbst. Durch den tiefen Einblickschacht 20 und eine gewölbte Frontscheibe 21 vor dem Anzeigebereich 12 ist ein guter Schutz gegen Spiegel- und Blendwirkungen gegeben.

Die Skala 18 der analogen Informationsanzeige 19 ist sichtseitig auf einem im übrigen transparenten oder als Lichtleiter ausgelegten Skalenträger 22 angeordnet, der von einer in der Gehäuse-Rückwand 23 gehalterten Lichtquelle 24 bestrahlt werden kann. Darunter ist an der Rückwand 23 ein (z.B. Wirbelstrom- oder Schrittmotor-) Antrieb 25 für die Schwenkbewegung des Zeigers 17 vor der Skala 18 angeordnet. Sein Drehpunkt, also seine im Skalenträger 22 gelagerte Zeigerwelle 26, liegt hinter oder unter dem unteren Rand 16 des Anzeigebereiches 12, so daß im Anzeigebereich 12 selbst nur der gegenüberliegende Teil des Zeigers 17 sichtbar ist.

Die Gehäuse-Rückwand 23 wird von einem Stecker 27 für die elektrische Ansteuerung des Instrumentes 11 durchragt.

Im unteren Bereich des Einblickschachtes 20 ragt die Zeile symbolischer Informationsanzeigen 13 in den Anzeigebereich 12 hinein. Dafür sind beim Ausführungsbeispiel nach Figur 2 die Displays für die Fest- und Wechsel-Zeichen 14, 15 an der Gehäusevorderwand 28 so angeordnet, daß sie unmittelbar als Informationszeile in den unteren Rand 16 des Anzeigebereiches 12 hineinragen. Insoweit es sich bei den Wechselzeichen 15 um Flüssigkristalldisplays oder andere optoelektronische Anzeigen handelt, erfolgt die Ansteuerung von einer Leiterplatte 29 aus, die im Bereich unterhalb der Wechselzeichen 15 ebenfalls hinter der Vorderwand 28 gehaltert ist. Für eine transflektive Beleuchtung dieser Wechselzeichen 15 ragt parallel zur Steuer-Leiterplatte 29 ein Lichtleiter 30 mit seinem keilförmig sich verjüngenden Abstrahlbereich 31 bis unmittelbar hinter die Wechselzeichen 15. Durch Lichtkästen gegeneinander abgeschottet kann so die individuelle Durchstrahlung der einzelnen symbolischen Informationsanzeigen 13 (in der Schnitt-Lage gemäß Figur 2/Figur 3 nicht sichtbar) erfolgen.

Außer den Vorteilen eines weitgehend blendfreien Anzeigebereiches 12 und einer Verlagerung der vergleichsweise großen Querabmessungen des Instruments 11 aus der lenkradseitigen Ebene der Armaturentafel fort, weist ein langer Einblickschacht 20 auch den physiologisch wesentlichen Vorteil auf, daß das Auge des Fahrers umso weniger durch Entfernungs-Umstellung zwischen der Außenwelt und dem Anziegebereich 12 beansprucht wird, je weiter dieser Anzeigebereich 12 vom Auge entfernt liegt. In dieser Hinsicht ist es zweckmäßig, die visuelle Ebene wenigstens der symbolischen Informationsanzeige 13 noch weiter vom Auge des Betrachters fort und damit möglichst sogar hinter die Skala 18 für die analogen Informationsanzeigen 19 zu verlagern. Dafür werden die Fest- und Wechselzeichen 14, 15 nicht gemäß Figur 2 unmittelbar am Rand 16 des Anzeigebereiches 12 angeordnet, sondern gemäß Figur 3 in diesen Rand 16 eingeblendet. Nun sind die Zellen 14, 15 für die Fest- und Wechselzeichendarstellungen der symbolischen Informationsanzeigen 13 nicht mehr quer, sondern etwa parallel zu Betrachtungsrichtung des Anzeigebereiches 12 hinter der Gehäuse-Vorderwand 28 und möglichst weit unterhalb des Anzeigebereiches 12 angordnet und über einen Reflektor 32 in den Anzeige-Rand 16 eingespiegelt. Den einzelnen Zellen 14, 15 sind dann Lichtkästen 33 mit individuell ansteuerbaren Lichtquellen 34 zugeordnet, die wie der Stecker 27 unmittelbar auf der Steuer-Leiterplatte 29 montiert sein können. Die Höhe der Lichtkästen 33 wird, zur Kontaktierung der über diesen gelegenen Wechselzeichen-Zellen 15, zur Leiterplatte 29 hin durch Kontaktstreifen 35 überbrückt, bei denen es sich vorzugsweise um eine in der Seitenwand des jeweiligen Lichtkastens 33 geführte Zebragummi-Kontaktierung für die elektrische Ansteuerung etwa der Segmentelektroden von Flüssigkristalldisplays handelt.

Für das Einspiegeln der aktuellen Informationen der Zellen 14, 15 in den Rand 16 des Anzeigebereiches 12, vorzugsweise in den unteren Rand 16 oberhalb der Zeiger-Welle 26, kann wenigstens ein parallel zur Vorderwand 28 verlaufender Lichtschacht 36 über den Zellen 14, 15 vorgesehen sein, der an seiner oberen Öffnung als Reflektor 32 einen in Richtung auf den Einblickschacht 20 geneigten Spiegel trägt. Der Schacht 36, einschließlich seines quer zur Höhenerstreckung und damit der Betrachtungsrichtung entgegen orientierten Abstrahlbereiches, kann aber auch durch einen Lichtleiter mit am freien Ende abgeschrägter Rückwand (als dem Reflektor 32) ersetzt sein. In beiden Fällen wird der optische Weg, zur Betrachtung des aktuellen Informationsgehaltes der Zellen 14, 15 hinter dem Anzeige-Rand 16, um die Strahlengang-Entfernung vom Rand 16 zu den Zellen 14, 15 vergrößert und somit in wünschenswerter Weise der Betrachtungsabstand der symbolischen Anzeigen 13 vom Betrachter weiter fort verlegt, ohne dafür in den teilweise vom Zeiger 17 überdeckten Bereich der Skala 18 zu gelangen oder gar die Ebenen der analogen Informationsanzeige 19 konstruktiv durchdringen zu müssen.

## Patentansprüche

1. Hybridanzeige-Instrument (11), insbesondere für eine Kraftfahrzeug-Armaturentafel, mit einem Anzeigebereich (12) zur Darbietung symbolischer Informationsanzeigen (13) und zur gleichzeitigen Darbietung einer analogen Informationsanzeige (19) mittels wenigstens eines Zeigers (17) vor wenigstens einer kreisbogenförmig verlaufenden Skala (18), wobei der Zeiger (17) mittels einer unterhalb des unteren Randes (16) des Anzeigebereiches (12) hinter den symbolischen Informationsanzeigen (13) gehalterten Welle bewegbar ist,
- wobei die symbolischen Informationsanzeigen von Festzeichen- und/oder Wechselzeichen-Zellen (14, 15) erzeugbar sind, die hinter einer Gehäuse-Vorderwand (28) unterhalb des Anzeigebereiches (12) quer zur Einblickrichtung angeordnet sind, und
- wobei die Festzeichen- und/oder Wechselzeichen-Zellen (14, 15) die symbolischen Informationsanzeigen (13) über einen Lichtschacht (36) mit einem Reflekor (32) oder über einen Lichtleiter mit einer Strahlumlenkung in den unteren Rand (16) des Anzeigebereiches (12) einblenden.

2. Hybridanzeige-Instrument (11), insbesondere für eine Kraftfahrzeug-Armaturentafel, mit einem Anzeigebereich (12) zur Darbietung symbolischer Informationsanzeigen (13) und zur gleichzeitigen Darbietung einer analogen Informationsanzeige (19) mittels wenigstens eines Zeigers (17) vor wenigstens einer kreisbogenförmig verlaufenden Skala (18), wobei der Zeiger (17) mittels einer unterhalb des unteren Randes (16) des Anzeigebereiches (12) hinter den symbolischen Informationsanzeigen (13) gehalterten Welle bewegbar ist,
- wobei die symbolischen Informationsanzeigen (13) Flüssigkristalldisplays oder optoelektronische Anzeigen (15) sind, die am unteren Rand des Anzeigebereiches angeordnet und von Leiterplatten (29) ansteuerbar sind, und
- wobei die Leiterplatten (29) hinter einer Gehäuse-Vorderwand (28) außerhalb des Anzeigebereiches (12) angeordnet sind und die Flüssigkristalldisplays oder optoelektronischen Anzeigen (15) die symbolischen Informationsanzeigen in den Anzeigebereich einblenden.

## Claims

1. A hybrid display instrument (11), especially for a motor vehicle dashboard, having a display region (12) for presenting symbolic information displays (13) and for the simultaneous presentation of an analog information display (19) by means of at least one pointer (17) in front of at least one scale (18) extending in an arc shape, wherein the pointer (17) can be moved by means of a shaft mounted beneath the lower edge (16) of the display region (12) behind the symbolic information displays (13),
- wherein the symbolic information displays can be produced by fixed character and/or changing character cells (14, 15), which are disposed behind a housing front wall (28) beneath the display region (12) at right angles to the viewing direction, and
- wherein the fixed character and/or changing character cells (14, 15) overlay the symbolic information displays (13) via a light tunnel (36) having a reflector (32) or via an optical waveguide with a beam deflection into the lower edge (16) of the display region (12).

2. A hybrid display instrument (11), especially for a motor vehicle dashboard, having a display region (12) for presenting symbolic information displays (13) and for the simultaneous presentation of an analog information display (19) by means of at least one pointer (17) in front of at least one scale (18) extending in an arc shape, wherein the pointer (17) can be moved by means of a shaft mounted beneath the lower edge (16) of the display region (12) behind the symbolic information displays (13),
- wherein the symbolic information displays (13) are liquid crystal displays or optoelectronic displays (15), which are disposed on the lower edge of the display region and can be controlled by printed circuit boards (29), and
- wherein the printed circuit boards (29) are disposed behind a housing front wall (28) outside the display region (12) and the liquid crystal displays or optoelectronic displays (15) overlay the symbolic information displays in the display region.

## Revendications

1. Instrument d'affichage hybride (11), notamment pour un tableau de bord d'un véhicule automobile, comportant une zone d'affichage (12) pour la présentation d'affichages d'informations sous forme de symboles (13) et pour la présentation simultanée d'un affichage analogique d'information (19) au moyen d'au moins une aiguille (17) se déplaçant devant au moins une graduation (18) s'étendant selon un arc de cercle, l'aiguille (17) pouvant se déplacer au moyen d'un axe maintenu en dessous du bord inférieur (16) de la zone d'affichage (12) derrière les affichages d'informations sous forme de symboles (13),
- dans lequel les affichages d'informations sous forme de symboles peuvent être produits par des cellules à signaux fixes et/ou des cellules à signaux variables (14, 15) qui sont disposées derrière une paroi avant du boîtier (28) en dessous de la zone d'affichage (12) transversalement par rapport à la direction d'observation, et
- dans lequel les cellules à signaux fixes et/ou les cellules à signaux variables (14, 15) illuminent les affichages d'informations sous forme de symboles (13) dans le bord inférieur (16) de la zone d'affichage (12) par l'intermédiaire d'un soupirail de lumière (36) comportant un réflecteur (32) ou par l'intermédiaire d'un guide de lumière comportant une déviation du faisceau.

2. Instrument d'affichage hybride (11), notamment pour un tableau de bord d'un véhicule automobile, comportant une zone d'affichage (12) pour la présentation d'affichages d'informations sous forme de symboles (13) et pour la présentation simultanée d'un affichage analogique d'informations (19) au moyen d'au moins une aiguille (17) se déplaçant devant au moins une graduation (18) s'étendant selon un arc de cercle, l'aiguille (17) pouvant se déplacer au moyen d'un axe maintenu en dessous du bord inférieur (16) de la zone d'affichage (12) derrière les affichages d'informations sous forme de symboles (13),
- dans lequel les affichages d'information sous forme de symboles (13) sont des afficheurs à cristaux liquides ou des affichages optoélectroniques (15), qui sont disposés au bord inférieur de la zone d'affichage et peuvent être commandés par des cartes de circuit imprimé (29), et
- dans lequel les cartes de circuit imprimé (29) sont disposées derrière une paroi avant du boîtier (28) à l'extérieur de la zone d'affichage (12) et les afficheurs à cristaux liquides ou les affichages optoélectroniques (15) illuminent les affichages d'informations sous forme de symboles dans la zone d'affichage.
